# EUROPÄISCHE PATENTSCHRIFT

(11) **EP 4 273 329 B1**
(45) Veröffentlichungstag und Bekanntmachung des Hinweises auf die Patenterteilung: **19.03.2025**
(21) Anmeldenummer: 23152804.3
(22) Anmeldetag: 23.01.2023
(51) Int. Cl.: E02F 9/08, B60K 13/04

(54) **ARBEITSMASCHINE**
A WORKING MACHINE
MACHINE DE TRAVAIL

(30) Priorität: 03.05.2022 DE 102022110879
(43) Veröffentlichungstag der Anmeldung: 08.11.2023
(73) Patentinhaber: Liebherr-Werk Bischofshofen GmbH, 5500 Bischofshofen (AT)
(72) Erfinder: GANITZER, Georg, 5542 Flachau (AT); KIEGERL, Christoph, 5453 Werfenweng (AT); SAGORZ, David, 5630 Bad Hofgastein (AT); KAINZ, Birgit, 3423 St. Andrä-Wördern (AT); KAINZ, Peter, 3423 St. Andrä-Wördern (AT)
(74) Vertreter: Herrmann, Uwe

(56) Entgegenhaltungen:
- US-A1- 2014 144 717
- US-B1- 6 427 798

## Beschreibung

Die vorliegende Erfindung betrifft eine Arbeitsmaschine mit einem Maschinenraum und einem Gehäuse, wobei das Gehäuse den Maschinenraum mindestens teilweise umgibt oder umgeben kann.

Aus dem Stand der Technik sind Arbeitsmaschinen mit Maschinenräumen, aus denen Stoffe oder Gase über Leitungen abgeführt werden, bekannt, wie zum Beispiel aus dem Dokument US 6 427 798 B1.

Die Leitungen werden dabei aus dem Maschinenraum geführt und die Stoffe oder Gase werden aus einem offenen Ende der Leitung bzw. einer Mündung in die Umgebung abgeführt.

Die Leitungsführung und die Integration der Mündung in die Arbeitsmaschine ist oftmals von außen zugänglich und dergestalt, dass die Leitung oder die Mündung durch Vandalismus in ihrer Funktion beeinträchtigt oder beschädigt werden können.

Vor diesem Hintergrund liegt der vorliegenden Erfindung die Aufgabe zugrunde, eine konstruktiv verbesserte Integration von Leitungen in Arbeitsmaschinen bereitzustellen.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass an dem Gehäuse ein Entlüftungsraum, in dem eine Leitungsmündung einer Leitung endet, angeordnet ist, wobei der Entlüftungsraum zum Maschinenraum hin abgegrenzt, vorzugsweise gasdicht abgegrenzt, ist und wobei der Entlüftungsraum durch einen Teilbereich des Gehäuses und ein in dem Maschinenraum angeordnetes Bodenstück gebildet wird.

Der Begriff Maschinenraum ist vorzugsweise so zu verstehen, dass es sich dabei um einen klassischen Motorraum, einen Kraftstoffsystem- und/oder Tank-Einbauort oder jeden anderen Komponenten-Einbauort, bspw. von Lüfterantrieben, handeln kann. Der Maschinenraum kann Zündquellen beinhalten.

Denkbar ist, dass das Bodenstück maschinenfest montiert ist.

Vorzugsweise ist vorgesehen, dass der Entlüftungsraum maschinenraumseitig angeordnet ist.

Die Leitungsmündung kann auch als Mündungsstück bezeichnet werden. Die Leitungsmündung der Leitung kann auch einen Teil der Leitung umfassen. Die Leitungsmündung kann auch mit der Leitung verbunden, vorzugsweise an der Leitung angeschraubt, sein.

In dem Entlüftungsraum befindliche Stoffe und/oder Gase sollen vorzugsweise nicht in dem Maschinenraum eindringen, sondern nach außen in die Umgebung der Arbeitsmaschine abgeführt werden.

Vorzugsweise ist vorgesehen, dass der Teilbereich ein in dem Gehäuse angebrachtes Bauteil, vorzugsweise einen Kasten umfasst. Das Bauteil wird damit vorzugsweise von dem Gehäuse umfasst und ist Bestandteil des Gehäuses.

Vorzugsweise ist auch vorgesehen, dass der Teilbereich bzw. der Entlüftungsraum nicht von dem Gehäuse nach außen absteht. Der Teilbereich ist vorzugsweise eine Einbuchtung in das Gehäuse, vergleichbar mit einer Loggia.

In einer vorteilhaften Ausführungsform ist vorgesehen, dass das Gehäuse eine mit dem Entlüftungsraum verbundene oder verbindbare Öffnung umfasst, die durch ein an oder in dem Gehäuse angeordnetes Gitter oder Lochblech verdeckt wird. Durch die Öffnung kann vorzugsweise ein Stoff oder ein Gas aus dem Entlüftungsraum in die Umgebung entweichen. Es kann auch vorgesehen sein, dass der Entlüftungsraum eine Öffnung aufweist, durch die Gas nach außen dringen kann. Die Öffnung des Entlüftungsraums kann die Öffnung des Gehäuses sein.

Denkbar ist, dass die Leitung eine Ausgasungsleitung, eine Wasserstoff-Überdruckleitung oder eine Ventline ist und/oder dass die Leitungsmündung eine Schutzkappe aufweist.

Denkbar ist, dass die Leitungsmündung an dem Bodenstück montiert oder daran befestigt ist.

Die Leitungen bzw. Leitungsmündungen werden vorzugsweise elegant innerhalb der Silhouette der Arbeitsmaschine angeordnet und sind vorzugsweise richtlinienkonform ausgeführt.

Durch das Verdecken der Öffnung ist vorzugsweise sichergestellt, dass die verpflichtend vorzusehende Schutzkappe auf der Leitungsmündung durch Vandalismus nicht abhandenkommen kann.

Vorzugsweise ist vorgesehen, dass an dem Bodenstück und/oder an dem Gehäuse Dichtungen angeordnet sind, die das, vorzugsweise gasdichte, Abgrenzen des Entlüftungsraums zum Maschinenraum hin bewirken können.

Das Gehäuse bzw. der Teilbereich des Gehäuses und das Bodenstück können mit den Dichtungen vorzugsweise derart zusammenwirken, dass sich ein zum Maschinenraum hin gasdichter Entlüftungsraum ergibt.

Die Abdichtung zwischen Bodenstück und Kasten erfolgt beispielsweise über Gummidichtungen, die auch die variierenden Spaltmaße zwischen maschinenraumfesten Teilen und Gehäuse ausgleichen können.

Denkbar ist ferner, dass das Gehäuse abgehoben oder aufgeklappt werden kann und/oder eine Haube oder Verkleidung ist.

Es kann somit vorzugsweise vorgesehen sein, dass ein mit dem Gehäuse, der Haube oder der Verkleidung beweglicher Kasten bzw. eine Konsole bei geschlossenem Gehäuse zusammen mit dem Bodenstück zum Maschinenraum hin abdichtet, sodass ein aus der Leitung austretender Stoff oder Gas, wie Wasserstoff, über ein in dem Gehäuse eingearbeitetes Gitter bzw. Lochblech austreten und nicht in den Maschinenraum eintreten kann, womit die Entzündung des Stoffs oder Gases im Maschinenraum verhindert wird.

Vorzugsweise ist vorgesehen, dass der Entlüftungsraum ein Absprengen oder Ablösen einer Schutzkappe von der Leitungsmündung erlaubt.

Die Ausführung des Teilbereichs bzw. des Kastens bzw. des Entlüftungsraums erlaubt vorzugsweise, dass die Schutzkappe bei Druckanstieg in der Leitung abgesprengt werden können.

Denkbar ist auch, dass in den Entlüftungsraum vorhandenes bzw. eindringendes Wasser über das Bodenstück abfließen kann.

Es kann vorgesehen sein, dass das Gehäuse Blech und/oder Kunststoff und/oder ein Kunststoffverbundmaterial und/oder eine Kombination von Materialien aufweist.

Vorzugsweise ist vorgesehen, dass die Arbeitsmaschine einen Brennstoffzellenantrieb und/oder einen Wasserstoff-Hubkolbenmotor und/oder ein Kraftstoffsystem, insbesondere ein Wasserstoff-Kraftstoffsystem, für zumindest abschnittsweise in gasförmigem Zustand vorliegendem Kraftstoff umfasst und/oder dass die Arbeitsmaschine eine mobile Arbeitsmaschine ist.

Vorzugsweise ist vorgesehen, dass die Arbeitsmaschine über ein Wasserstoff-Kraftstoffsystem verfügt, mit dem ein Brennstoffzellenantrieb oder ein Wasserstoff-Hubkolbenmotor gespeist wird.

Des Weiteren kann es sich bei dem Kraftstoff in dem Kraftstoffsystem um jeden denkbaren gasförmigen Kraftstoff, wie Wasserstoff, Erdgas oder Methangas, handeln.

Es kann bei dem Kraftstoffsystem zweckmäßig sein, Ausgasungsleitungen und Überdruckleitungen an geeigneter Position aus dem Maschinenraum ausleiten zu können.

Vorzugsweise handelt es sich bei der Arbeitsmaschine um einen Radlader, einen Teleskoplader, einen Bagger mit Rad- und/oder Raupenfahrwerk, einen knickgelenkten Muldenkipper, eine Planier- und/oder Laderaupe oder um eine Maschine im Bereich der Materialumschlagtechnik.

Es ist vorzugsweise ein richtlinienkonformes Ausleiten der Leitungen bzw. Wasserstoff-Überdruckleitungen bzw. Ventlines an die Umgebung möglich.

Die Erfindung löst die Anforderungen der Automotive Wasserstoffrichtlinien vorzugsweise in außerordentlich zweckmäßiger, aber auch elegant anmutender Weise.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Schnittansicht einer Ausführungsform einer erfindungsgemäßen Arbeitsmaschine.
- Fig. 2:: eine Schnittansicht dieser Ausführungsform einer erfindungsgemäßen Arbeitsmaschine aus einer anderen Perspektive.
- Fig. 3:: eine Schnittansicht dieser Ausführungsform einer erfindungsgemäßen Arbeitsmaschine aus einer anderen Perspektive.
- Fig. 4:: eine Teilansicht dieser Ausführungsform einer erfindungsgemäßen Arbeitsmaschine.

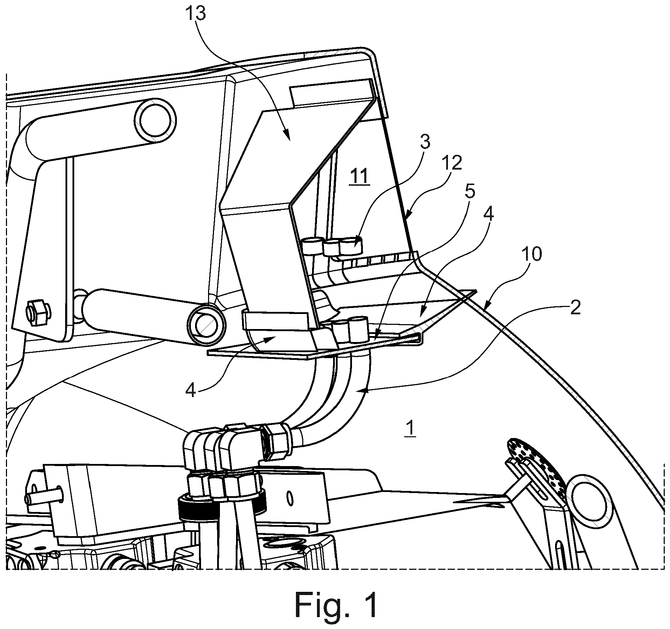

In Figur 1 ist zu sehen, dass eine Haube 10 einen Maschinenraum 1 zumindest teilweise umgibt.

In der Haube 10 ist eine Konsole 13 befestigt. Eine Einbuchtung 11 wird durch das Gehäuse 10 und die Konsole 13 gebildet. An der Konsole 13 ist eine Dichtung 4 befestigt, die an einem Bodenstück 5 anliegt. Das Bodenstück 5 ist an oder auf einer Tankwanne befestigt. An dem Bodenstück 5 ist eine weitere Dichtung 4 befestigt, die an dem Gehäuse 10 innen anliegt. Die Einbuchtung 11 und das Bodenstück 5 bilden mit den Dichtungen 4 einen Entlüftungsraum. Die Einbuchtung 11 ist durch ein an der Haube 10 angeordnetes Lochblech 12 nach außen hin abgedeckt. Durch das Lochblech 12 kann Gas entweichen. Ein Hineingreifen in die Einbuchtung 11 wird durch das Lochblech 12 verhindert.

In Figur 1 ist ferner zu sehen, dass durch das Bodenstück 5 mehrere Leitungen 2 geführt sind. Die Leitungen 2 enden in Leitungsmündungen. Das Bodenstück 5 kann an den Leitungen 2 befestigt sein.

Schutzkappen 3 sind in einer von den Leitungsmündungen abgelösten Stellung zu sehen, um zu verdeutlichen, dass die Einbuchtung 11 genug Raum für ein Ablösen oder Absprengen der Schutzkappen 3 bietet.

Die Leitungen 2 dürfen nur bis zu einer gewissen Höhe aus dem Bodenstück 5 nach oben ragen und das Bodenstück 5 weist vorzugsweise einen Mindestabstand zum Gehäuse 10 auf, da die Haube 10 sonst nicht aufgeklappt werden kann.

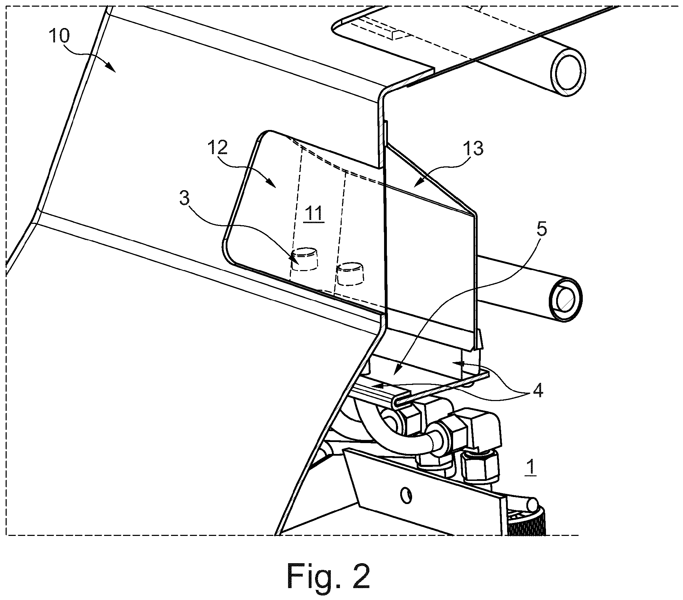

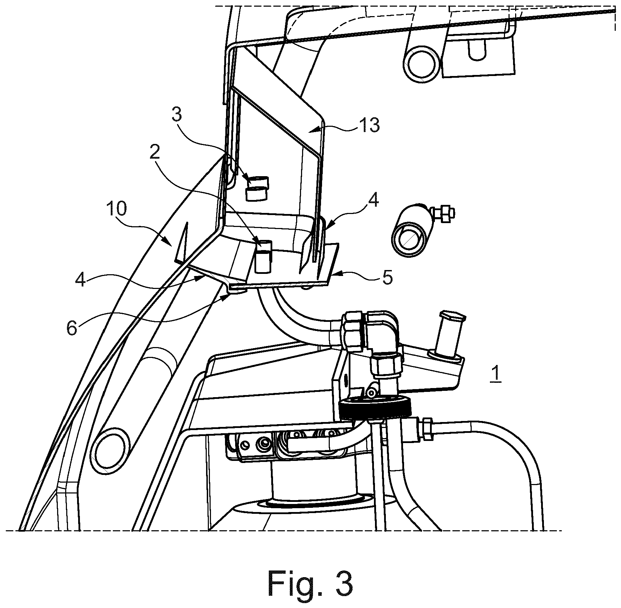

Die Figuren 2 und 3 zeigt die Anordnung der erwähnten Elemente nochmals aus einer jeweils anderen Perspektive.

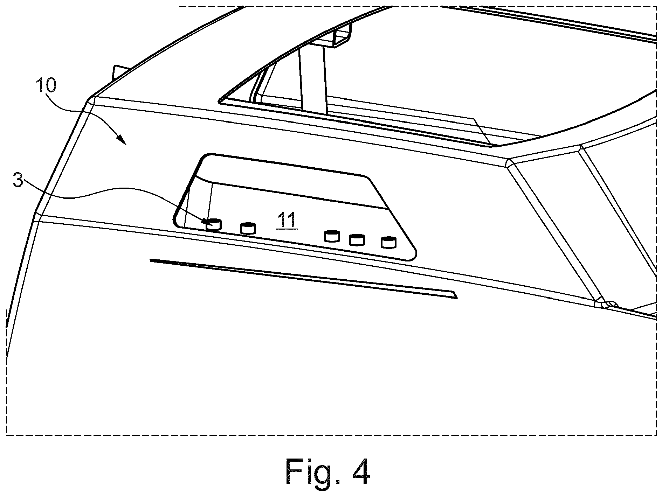

In Figur 4 ist die Haube 10 einer Arbeitsmaschine mit einer nach innen verlaufenden Einbuchtung 11, die eine Öffnung nach außen aufweist, zu sehen. In der Einbuchtung 11 sind Schutzkappen 3 in einer abgelösten Position angeordnet.

## Patentansprüche

1. Arbeitsmaschine mit einem Maschinenraum (1) und einem Gehäuse (10), wobei das Gehäuse den Maschinenraum mindestens teilweise umgibt oder umgeben kann, **dadurch gekennzeichnet, dass** an dem Gehäuse ein Entlüftungsraum, in dem eine Leitungsmündung einer Leitung (2) endet, angeordnet ist, wobei der Entlüftungsraum zum Maschinenraum hin abgegrenzt, vorzugsweise gasdicht abgegrenzt, ist und wobei der Entlüftungsraum durch einen Teilbereich des Gehäuses und ein in dem Maschinenraum angeordnetes Bodenstück (5) gebildet wird.

2. Arbeitsmaschine nach Anspruch 1, **dadurch gekennzeichnet, dass** der Teilbereich ein in dem Gehäuse angebrachtes Bauteil, vorzugsweise einen Kasten umfasst.

3. Arbeitsmaschine nach Anspruch 1 oder 2, **dadurch gekennzeichnet, dass** das Gehäuse eine mit dem Entlüftungsraum verbundene oder verbindbare Öffnung umfasst, die durch ein an oder in dem Gehäuse angeordnetes Gitter oder Lochblech verdeckt wird.

4. Arbeitsmaschine nach einem der vorhergehenden Ansprüche, **dadurch gekennzeichnet, dass** der Entlüftungsraum nicht von dem Gehäuse nach außen absteht.

5. Arbeitsmaschine nach einem der vorhergehenden Ansprüche, **dadurch gekennzeichnet, dass** die Leitungsmündung der Leitung an dem Bodenstück angeordnet ist.

6. Arbeitsmaschine nach einem der vorhergehenden Ansprüche, **dadurch gekennzeichnet, dass** die Leitung eine Ausgasungsleitung, eine Wasserstoff-Überdruckleitung oder eine Ventline ist und/oder dass die Leitungsmündung eine Schutzkappe aufweist.

7. Arbeitsmaschine nach einem der vorhergehenden Ansprüche, **dadurch gekennzeichnet, dass** an dem Bodenstück und/oder an dem Gehäuse Dichtungen angeordnet sind, die das, vorzugsweise gasdichte, Abgrenzen des Entlüftungsraums zum Maschinenraum hin bewirken können.

8. Arbeitsmaschine nach einem der vorhergehenden Ansprüche, **dadurch gekennzeichnet, dass** das Gehäuse abgehoben oder aufgeklappt werden kann und/oder eine Haube oder Verkleidung ist.

9. Arbeitsmaschine nach einem der vorhergehenden Ansprüche, **dadurch gekennzeichnet, dass** der Entlüftungsraum ein Absprengen oder Ablösen einer Schutzkappe von der Leitungsmündung erlaubt.

10. Arbeitsmaschine nach einem der vorhergehenden Ansprüche, **dadurch gekennzeichnet, dass** in den Entlüftungsraum vorhandenes Wasser über das Bodenstück abfließen kann.

11. Arbeitsmaschine nach einem der vorhergehenden Ansprüche, **dadurch gekennzeichnet, dass** das Gehäuse Blech und/oder Kunststoff und/oder ein Kunststoffverbundmaterial und/oder eine Kombination von Materialien aufweist.

12. Arbeitsmaschine nach einem der vorhergehenden Ansprüche, **dadurch gekennzeichnet, dass** die Arbeitsmaschine einen Brennstoffzellenantrieb und/oder einen Wasserstoff-Hubkolbenmotor und/oder ein Kraftstoffsystem, insbesondere ein Wasserstoff-Kraftstoffsystem, für zumindest abschnittsweise in gasförmigem Zustand vorliegendem Kraftstoff umfasst und/oder dass die Arbeitsmaschine eine mobile Arbeitsmaschine ist.

## Claims

1. Working machine, comprising an engine room (1) and a housing (10), wherein the housing at least partially surrounds or can surround the engine room, **characterized in that** a venting space, in which a line mouth of a line (2) ends, is arranged on the housing, wherein the venting space is delimited from the engine room, preferably delimited in a gas-tight manner, and wherein the venting space is formed by a partial region of the housing and a bottom piece (5) arranged in the engine room.

2. Working machine according to claim 1, **characterized in that** the partial region comprises a component, preferably a box, mounted in the housing.

3. Working machine according to claim 1 or 2, **characterized in that** the housing comprises an opening connected or connectable to the venting space and covered by a grille or perforated plate arranged on or in the housing.

4. Working machine according to any one of the preceding claims, **characterized in that** the venting space does not project outwardly from the housing.

5. Working machine according to any one of the preceding claims, **characterized in that** the line mouth of the line is arranged at the bottom piece.

6. Working machine according to any one of the preceding claims, **characterized in that** the line is an outgassing line, a hydrogen overpressure line or a vent line and/or that the line mouth comprises a protective cap.

7. Working machine according to any one of the preceding claims, **characterized in that** seals are arranged on the bottom piece and/or on the housing, which can effect the, preferably gas-tight, delimitation of the venting space with respect to the engine room.

8. Working machine according to any one of the preceding claims, **characterized in that** the housing can be lifted or folded open and/or is a hood or casing.

9. Working machine according to any one of the preceding claims, **characterized in that** the venting space allows a protective cap to be popped off or detached from the line mouth.

10. Working machine according to any one of the preceding claims, **characterized in that** water present in the venting space can drain off via the bottom piece.

11. Working machine according to any one of the preceding claims, **characterized in that** the housing comprises sheet metal and/or plastic material and/or a plastic composite material and/or a combination of materials.

12. Working machine according to one of the preceding claims, **characterized in that** the working machine comprises a fuel cell drive and/or a hydrogen reciprocating engine and/or a fuel system, in particular a hydrogen fuel system, for fuel present at least in sections in the gaseous state and/or **in that** the working machine is a mobile working machine.

## Revendications

1. Machine de travail avec un espace de machine (1) un carter (10), le carter entourant ou pouvant entourer au moins partiellement l'espace de machine, **caractérisée en ce que** sur le carter est agencé un espace de ventilation dans lequel se termine une embouchure de conduite d'une conduite (2), l'espace de ventilation étant délimité par rapport à l'espace de machine, de préférence délimité de manière étanche aux gaz, et l'espace de ventilation étant formé par une zone partielle du carter et une pièce de fond (5) agencée dans l'espace de machine.

2. Machine de travail selon la revendication 1, **caractérisée en ce que** la zone partielle comprend un composant monté dans le carter, de préférence un caisson.

3. Machine de travail selon la revendication 1 ou 2, **caractérisée en ce que** le carter comprend une ouverture reliée ou pouvant être reliée à l'espace de ventilation, qui est masquée par une grille ou une tôle perforée agencée sur ou dans le carter.

4. Machine de travail selon l'une quelconque des revendications précédentes, **caractérisée en ce que** l'espace de ventilation ne fait pas saillie vers l'extérieur du carter.

5. Machine de travail selon l'une quelconque des revendications précédentes, **caractérisée en ce que** l'embouchure de conduite de la conduite est agencée sur la pièce de fond.

6. Machine de travail selon l'une quelconque des revendications précédentes, **caractérisée en ce que** la conduite est une conduite de dégazage, une conduite de surpression d'hydrogène ou une ligne d'évent et/ou **en ce que** l'embouchure de conduite présente un capuchon de protection.

7. Machine de travail selon l'une quelconque des revendications précédentes, **caractérisée en ce que** des joints d'étanchéité sont agencés sur la pièce de fond et/ou sur le carter, qui peuvent assurer la délimitation, de préférence étanche aux gaz, de l'espace de ventilation par rapport à l'espace de machine.

8. Machine de travail selon l'une quelconque des revendications précédentes, **caractérisée en ce que** le carter peut être soulevé ou ouvert et/ou est un capot ou un habillage.

9. Machine de travail selon l'une quelconque des revendications précédentes, **caractérisée en ce que** l'espace de ventilation permet de faire sauter ou de détacher un capuchon de protection de l'embouchure de conduite.

10. Machine de travail selon l'une quelconque des revendications précédentes, **caractérisée en ce que** l'eau présente dans l'espace de ventilation peut s'écouler par l'intermédiaire de la pièce de fond.

11. Machine de travail selon l'une quelconque des revendications précédentes, **caractérisée en ce que** le carter présente de la tôle et/ou du plastique et/ou un matériau composite de plastique et/ou une combinaison de matériaux.

12. Machine de travail selon l'une quelconque des revendications précédentes, **caractérisée en ce que** la machine de travail comprend un entraînement par pile à combustible et/ou un moteur à piston alternatif à hydrogène et/ou un système de carburant, notamment un système de carburant à hydrogène, pour du carburant présent au moins par sections à l'état gazeux et/ou **en ce que** la machine de travail est une machine de travail mobile.
